# EUROPÄISCHE PATENTSCHRIFT

(11) **EP 0 382 081 B1**
(45) Veröffentlichungstag und Bekanntmachung des Hinweises auf die Patenterteilung: **14.12.1994**
(21) Anmeldenummer: 90101960.4
(22) Anmeldetag: 01.02.1990
(51) Int. Cl.: F16B 19/00, F16B 13/10, E04B 1/41

(54) **Bolzen zum Verbinden von Bauteilen mit Wandflächen**
Bolts for connecting structural members with wall areas
Boulon pour connecter des pièces de construction à des surfaces murales

(30) Priorität: 04.02.1989 DE 8901240 U; 19.02.1989 DE 8901909 U; 21.04.1989 DE 8905053 U
(43) Veröffentlichungstag der Anmeldung: 16.08.1990
(73) Patentinhaber: Schäfer, Manfred, D-57234 Wilnsdorf (DE)
(72) Erfinder: Schäfer, Manfred, D-57234 Wilnsdorf (DE)
(74) Vertreter: Grosse, Dietrich, Dipl.-Ing.

(56) Entgegenhaltungen:
- DE-A- 2 834 331
- DE-A- 3 501 047
- DE-B- 2 200 513

## Beschreibung

Die Erfindung betrifft einen in in eine Wandung eingearbeitete Bohrung einbringbaren Bolzen zum Verbinden von Bauteilen mit Wandflächen, insbesondere von Ziegel- oder Betonbauten, mit einer Vorrichtung zur Stabilisierung seines Sitzes und zur Verankerung gegen Ausziehen durch ihn beanspruchende Zugkräfte.

Es ist üblich, zum Befestigen an Wandflächen in diese Ausnehmungen oder Bohrungen einzuarbeiten und in diese Dübel einzusetzen. Beim Benutzen üblicher Schraubdübel spreizen sich diese beim Einbringen bspw. von Holzschrauben und vermitteln so einen mäßig festen kraftschlüssigen Sitz.

In der DE-A-2 834 331 wird ein Gewindestift offenbart, der mittels seines Gewindes in in Bohrungen eingebrachte Dübel oder aber direkt in Holzwände einschraubbar ist und gegen Herausschrauben oder gegebenenfalls auch nur ein Verdrehen durch eine auch als Diebstahlssicherung empfohlene Drehsicherung geschützt ist, die durch einen eine Schrägbohrung des Gewindestiftes durchdringenden und in das diesen umgebenden Material eingetriebenen Metallstift dargestellt ist. Die Montage durch Einschrauben gestaltet sich unerwünscht umständlich, und bei Wandungen von Ziegel- oder Betonbauten kann auf einen zusätzlichen und die aufnehmbaren Zugkräfte begrenzenden Dübel nicht verzichtet werden. Solche sich kraftschlüssig haltende Spreizdübel erweisen sich daher als unzureichend, und beim Versuch, andere Befestigungselemente zu verwenden, macht sich nachteilig bemerkbar, daß insbesondere aus Beton bestehende Wandungen zwar hohen Druckbeanspruchungen zu genügen vermögen, jedoch nur relativ geringe Zugbelastungen übernehmen können, die beim Bilden von Rissen im Beton zusätzlich stark abfallen.

Man hat daher sogenannte Anker entwickelt, die relativ tief in Wandungen eingreifen und an ihrem inneren Ende mit Spreizelementen ausgestattet sind, die durch Verspannen mittels eines Konus' sich in der sie aufnehmenden Bohrung festsetzen. Diese Bohrungen sind über den größten Teil ihrer Tiefe zylindrisch ausgebildet, jedoch an ihren inneren Enden konisch erweitert. Derartige Halteelemente erfordern nicht nur einen relativ großen Herstellungsaufwand und sind damit unverhältnismäßig teuer, bei der Montage sind Spezialwerkzeuge zu verwenden, um die konische Ausweitung des inneren Endes der sie aufnehmenden Bohrung bewirken zu können, und in der Praxis hat es sich gezeigt, daß der ordnungsgemäße, hohe Zugkräfte erlaubende Sitz nicht immer erreichbar ist und sich als schlecht überprüfbar erweist.

Konisch erweiterte Bohrungen werden nach der DE-A-3 501 047 entbehrlich, wenn eine Dübelhülse verwendet wird, von deren zentrischer Bohrung divergierend engere, als nach außen offene Rinnen fortgesetzte Bohrungen ausgehen. Zum Halten der Dübelhülse bspw. im Beton werden in die divergierenden Bohrungen jeweils Bolzen geringer Länge eingeführt, die nach dem Einsetzen der Dübelhüse in eine sie aufnehmende Bohrung von der Mittelbohrung aus eingetrieben werden und während der Eintreibbewegung durch die divergierenden Bohrungen und die sie fortsetzenden offenen Rinnen geführt und gestützt nur mit einem Teil ihres Durchmessers über den Umkreis der Dübelhülse, diese in der sie aufnehmenden Bohrung festsetzend, hervortreten. Auch hier erweisen sich sowohl die Herstellungs- als auch die Montagekosten als unerwünscht hoch, und die Übertragung von Zugkräften von der Dübelhülse auf den Beton erweist sich sowohl als problematisch als auch als schlecht überprüfbar.

Die Erfindung geht von der Aufgabe aus, ein Verbindungselement der bezeichneten Gattung insbesondere für Betonwandungen zu schaffen, das mit geringem Aufwande herstellbar ist, das sich leicht montieren und in Wandungen verankern läßt, und das einen sicheren, zuverlässigen und mit hohen Zugkräften belastbaren Halt bietet.

Gelöst wird diese Aufgabe, indem der als Verbindungselement eingesetzte Bolzen einen gewindelosen, zylindrischen Verankerungsabschnitt und einen Befestigungsabschnitt zur Aufnahme des zu haltenden Bauteiles aufweist, und indem er als Vorrichtung zur Stabilisierung seines Sitzes und zur Verankerung gegen Ausziehen durch ihn beanspruchende Zugkräfte mit einer den Bolzen schräg durchdringenden, um einen Winkel zwischen 2,5 und 45° gegen seine Achse geneigten, aus seiner Mantel- und/oder Rückfläche austretenden Bohrung versehen ist, in die ein entsprechend schräg verlaufender und in seiner Länge die der Bohrung des Bolzens überschreitender zylindrischer Ankerstift eingeführt ist, der zur Verankerung des Bolzens gegen Zugkräfte in ein zusätzliches Sackloch der den Bolzen aufnehmenden Wandung eingreift.

Der eigentliche Bolzen ist hierbei sehr einfach ausgeführt und benötigt zu seiner Verankerung nur eine zusätzliche, schräg verlaufende Bohrung, und als zusätzliches, seine Lage sicherndes und ihn auch gegen hohe Last haltendes Bauteil ist einzig ein in die Schrägbohrung und ein entsprechendes Sackloch der Wand einbringbarer Ankerstift erforderlich, so daß sich ein nur geringer Herstellungsaufwand ergibt. Zum Einsetzen in eine Wandung wiederum wird nur ein übliches zylindrisches Sackloch mit der Länge des Bolzens entsprechender Tiefe gefordert, dessen Durchmesser zwar dem des Bolzens angepaßt ist, sich aber nicht als kritisch erweist, und zusätzlich ist eine schräg verlaufende Querbohrung geringeren Durchmessers erforderlich, bei deren Einbringung die Bohrung des Bolzens als Lehre bzw. als Hilfe einsetzbar ist. Nach dem Einsetzen des Bolzens sowie Einschieben des Ankerstiftes ergibt sich eine hervorragende Haltbarkeit und insbesondere eine feste Verankerung gegen unbeabsichtigtes Drehen oder axiales Herauslösen des Bolzens; da der Ankerstift in eine nur flach gegen die Achse des Bolzens geneigte und damit relativ tief aus dem Bolzen austretende Schrägbohrung eingreift, sind die bei der Belastung des Bolzens auftretenden Zugkräfte auch bei Betonwänden leicht übernehmbar, da sie in größerer Tiefe aufgenommen werden.

Zweckmäßige und vorteilhafte Weiterbildungen der Erfindung sind den Unteransprüchen zu entnehmen.

Im einzelnen sind die Merkmale der Erfindung anhand der folgenden Beschreibung von Ausführungsbeispielen erläutert. Es zeigen hierbei:
- Figur 1: einen als Anker verwendbaren Bolzen,
- Figur 2: die Stirnansicht des Bolzens nach Fig. 1,
- Figur 3: die Ansicht eines für den Bolzen der Fig. 1 und 2 vorgesehenen Ankerstiftes,
- Figur 4: die Ansicht eines in eine geschnitten dargestellte Wandung eingesetzten Bolzens mit zugehörigem Ankerstift,
- Figur 5: in gleicher Darstellung einen mittels zweier Ankerstifte wirksamen Bolzen,
- Figur 6: eine Stirnansicht des Bolzens nach Fig. 5,
- Figur 7: eine Ansicht eines mit einem Muttergewinde versehenen Bolzens,
- Figur 8: die Ansicht eines nicht abgesetzten, in eine Sackbohrung einer Wand eingebrachten Bolzens,
- Figur 9: in entsprechender Darstellung einen beidendig abgesetzten Bolzen,
- Figur 10: einen gedrungen ausgebildeten Bolzen, dessen Bohrungen sich jeweils von einer Bund- zu einer Rückfläche erstrecken,
- Figur 11: einen Bolzen mit leicht abgekantetem, das Befestigungsgewinde aufweisenden Ansatz, und
- Figur 12: einen stärker abgekanteten Bolzen, dessen den Ankerstift aufnehmende Bohrung des Ansatz zentrisch durchdringt.

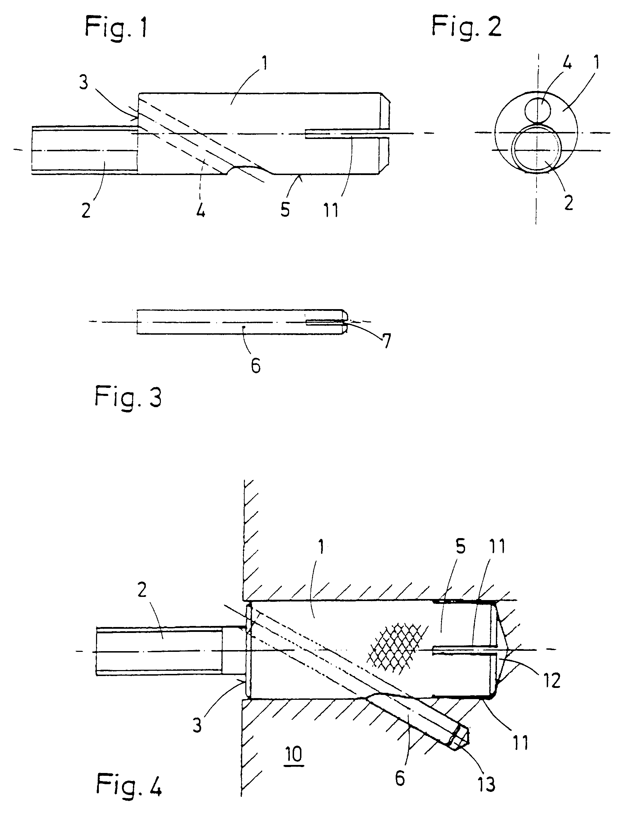

In Fig. 1 ist in der Seitenansicht und in Fig. 2 in der Stirnansicht ein Bolzen 1 dargestellt, der mit einem als Gewindeschraube ausgebildeten, exzentrisch angeordneten Ansatz 2 zur Aufnahme einer zu befestigende Bauteile haltenden Mutter ausgestattet ist. In den beim Übergang des Bolzens 1 zum Ansatz 2 vorgesehenen Bund 3 ist eine schräg verlaufende Bohrung 4 eingebracht, die an der Mantelfläche 5 des Bolzens schräg seitlich aus diesem austritt. Mit diesem Bolzen verwendet wird ein in Fig. 3 gezeigter Ankerstift 6, der einendig mit einem Schlitz 7 ausgestattet ist, und dessen beide durch diesen gebildete gabelartige Enden leicht gespreizt ausgeführt sein können.

Die Unterbringung eines solchen Bolzens 1 in einer Wandung 10 ist in Fig. 4 veranschaulicht. Abweichend von dem in den Fig. 1 und 2 dargestellten Bolzen ist der Bolzen 1 der Fig. 4 mit einem zentrischen Ansatz 2 versehen, und er ist am freien Ende mit zwei sich kreuzenden Schlitzen 11 ausgestattet. Zur Erhöhung der Haftung der Mantelfläche 5 des ihn aufnehmenden Sackloches 12 ist seine Mantelfläche 5, wie durch eine lokale Kreuzschraffur angedeutet, zumindest bereichsweise geriffelt ausgeführt. Es besteht aber auch die Möglichkeit, eine andere Rändelung anzuwenden, oder aber zumindest entlang von Bereichen des Mantels Nute in die Mantelfläche einzudrehen, die zweckmäßig scharfkantig ausgeführt und vorzugsweise mit sägezahnförmigem Profil derart ausgebildet sind, daß die jeweils flachen Flanken sich rechtsseitig und die steilen Flanken linksseitig befinden.

Zur Montage des Bolzens ist in die Wandung 10 das Sackloch 12 eingebracht, das in seiner Tiefe etwa der Länge des Bolzens 1 entspricht und rein zylindrisch ausgebildet sein kann. Ein weiteres Sackloch 13 ist schräg ausgeführt; bei seiner Herstellung kann eine gesonderte Lehre verwendet werden, ein solches Sackloch kann gegebenenfalls auch freihändig gebohrt werden, und es besteht durchaus auch die Möglichkeit, den Bolzen 1 in die Sackbohrung 12 einzuführen und dessen schräge Bohrung 4 als Lehre für das Einbringen der Sackbohrung 13 zu benutzen. Nach Fertigstellen der Bohrung wird in die schräge Bohrung 4 der Ankerstift 6 so weit eingeführt, daß er den Bolzen 1 durchdringt und sein vorderes Ende in die Sackbohrung 13 eintritt. Sein hinteres Ende tritt hierbei gegen den Bund 3 zurück.

Mit dem Einbringen des Sicherungsstiftes 6 ist der Bolzen 1 gegen Drehen ebenso verankert wie gegen Herausziehen selbst bei einer Beaufschlagung mit hohen Zugkräften, da der Ankerstift 6 an den nach links gerichteten Wandungsbereichen der Sackbohrung 13 aufliegt und von diesen gehalten wird. Die tragenden Flächen liegen dank des flachen, zwischen den Achsen des Bolzens und des Ankerstiftes gebildeten Winkels so weit innerhalb der Wandung 10, daß auch bei nur mäßigen zulässigen Zugkräften innerhalb der Wandung ein absoluter, hochbelastbarer Halt erzielt wird.

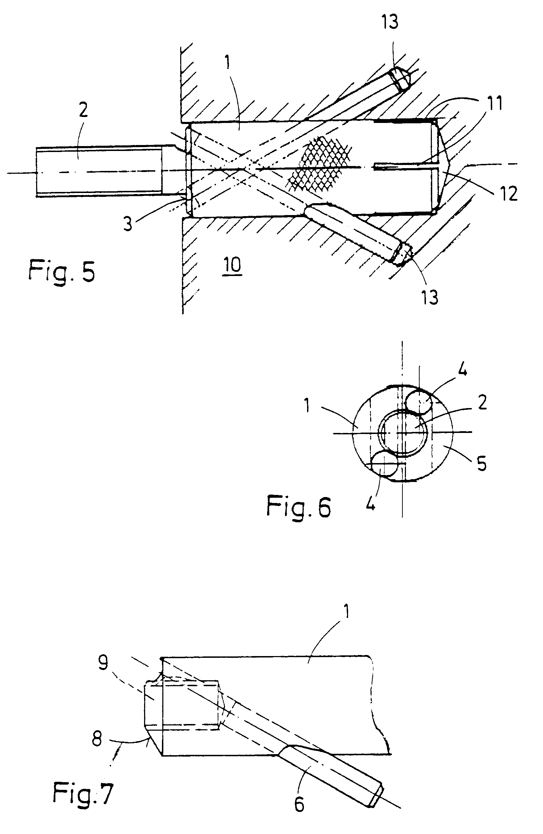

Die Erfindung ist einer Reihe von Varianten fähig. So kann zur Symmetrierung und zur Erhöhung der Belastbarkeit ein Bolzen gemäß den Fig. 5, 6 und 10 benutzt werden, bei dem in den Bund 3 zwei divergierende Bohrungen 4 symmetrisch eingebracht sind und dementsprechend bei der Montage außer der der Wandfläche normalen Sackbohrung 12 in diese zwei schräge Sackbohrungen 13 einzubringen sind, in die zur Verankerung des Bolzens zwei Ankerstifte 6 eingeführt sind. Der Verlauf der Bohrungen läßt sich auch anhand der in Fig. 6 wiedergegebenen Stirnansicht des Bolzens 1 der Fig. 5 verfolgen.

Es ist auch nicht erforderlich, Bolzen 1 allein mit Ansätzen zu verwenden. In Fig. 7 ist ein Bolzen gezeigt, in dessen Stirnfläche 8 außer der schräg verlaufenden Bohrung 4 eine axiale Bohrung 9 eingebracht ist, die mit einem Muttergewinde versehen ist, so daß die Befestigung von mit der Wand zu verbindenden Bauteilen mittels einer einfachen Maschinenschraube erfolgen kann. Auch hier besteht die Möglichkeit, mehr als eine Schrägbohrung 4 anzuwenden und damit mehr als einen Ankerstift 6 einzubringen. Des weiteren besteht die Möglichkeit, die Bohrung 9 nicht axial, sondern gegen die Achse des Bolzens verschoben achsparallel anzubringen, so daß die Stirnfläche einseitig breiter über die Bohrung vorsteht, so wie dies für den Ansatz 2 des Bolzens 1 der Fig. 1 und 2 zutrifft.

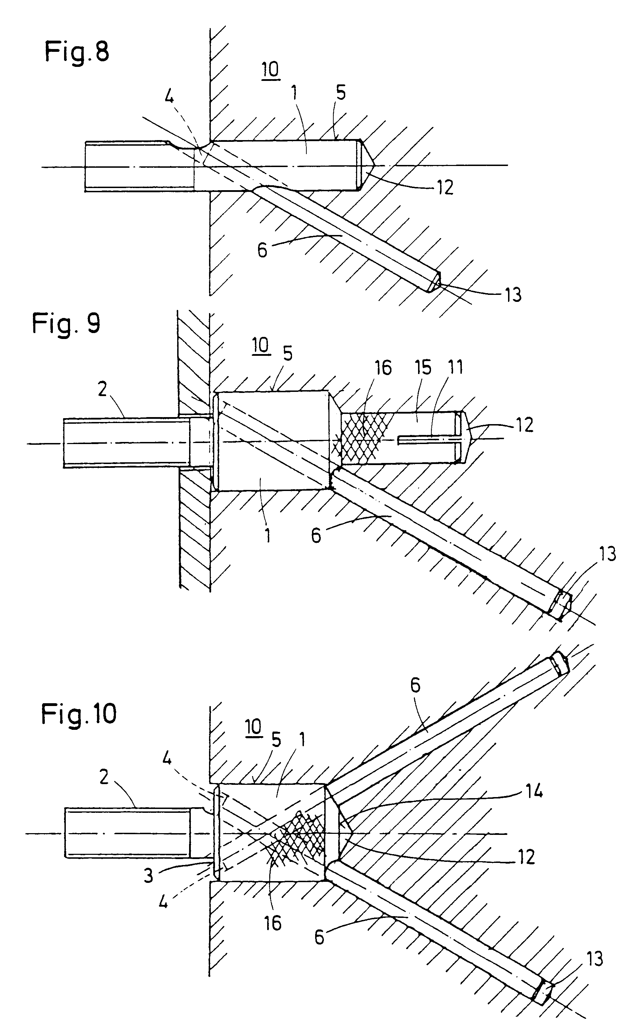

In Fig. 8 ist gleichartig ein relativ einfach ausgebildeter Bolzen 1 dargestellt, der mit gleicher Stärke über seine gesamte Länge ausgeführt ist, so daß er von Stangenmaterial ohne große Dreharbeiten abgestochen werden kann. Auf sein freies Ende ist ein der Befestigung dienendes Gewinde geschnitten, und die schräg verlaufende Bohrung 4 des Bolzens 1 der Fig. 8 geht von einem Mantelbereiche des Bolzens aus, der mit wesentlichen Teilen sowohl noch innerhalb des glatten Schaftbereiches als auch innerhalb des Gewindebereiches liegt, und die Bohrung 4 tritt innerhalb eines relativ tief in die Wandung 10 eingreifenden Mantelbereiches aus dem Bolzen aus. Bei der dargestellten Tiefe des den Bolzen 1 aufnehmenden Sackloches 12 ist keine besondere Bearbeitung der Wand für das Einbringen des Ankerstiftes 6 erforderlich; es besteht aber auch die Möglichkeit, die Sackbohrung 13 derartig anzuordnen, daß sie mit ihrem oberen Bereich nicht völlig innerhalb des Sackloches 12 verläuft, sondern über dieses hinaus in die Wandung eingreift.

Der in Fig. 9 dargestellte Bolzen ist beidseitig auf einen mit einem Gewinde ausgestatteten Ansatz 2 und auf einen Rückansatz 15 abgesetzt, der mit Schlitzen 11 versehen ist. Die angedeutete Textur, Rändelung oder dergleichen braucht sich nicht nur über einen Oberflächenbereich 16 des Rückansatzes 15 zu erstrecken, sondern kann sich zusätzlich oder statt dessen auch über die Mantelfläche 5 erstrecken.

In der Fig. 10 ist ein Bolzen 1 dargestellt, der kurz ausgeführt und zum Ansatz 2 hin stark abgesetzt ist, so daß die beiden Bohrungen 4 divergierend und gegeneinander versetzt sich jeweils vom Bund 3 bis zur Rückfläche 14 bzw. deren Anfasung erstrecken. Die Versetzung der beiden Bohrungen 4 kann hierbei so begrenzt sein, daß sie im Kreuzungsbereich einander tangieren. Sie können aber auch stärker versetzt sein, so daß auch im Überkreuzungsbereich noch Material stehenbleibt, und in Sonderfällen ist es auch möglich, die Bohrungen mit Teilbereichen einander durchdringen zu lassen und in einem der Ankerstifte eine Ausnehmung oder gar eine umlaufende Nut derart vorzusehen, daß nach dem Einschieben dieses Ankerstiftes 6 auch der andere Ankerstift einschiebbar ist, wobei er an der Kreuzungsstelle die Ausnehmung des ersten Ankerstiftes, in diese eingreifend, passiert und diesen verriegelt.

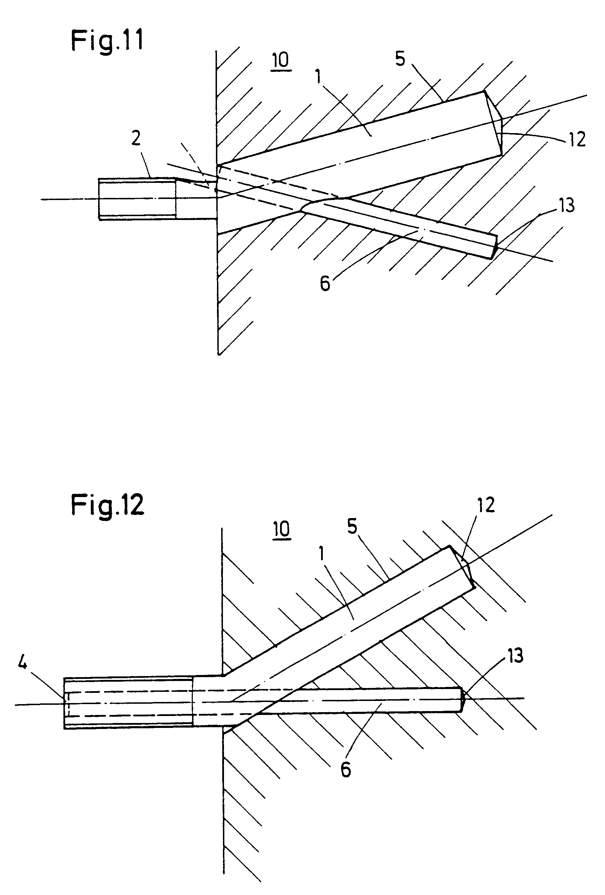

Sicherungen der Lage von Ankerstiften können auch durch die Aufteilung eines oder beider Enden, vorteilhaft verbunden mit einem Aufbiegen der beiden gebildeten Zungen, vorgenommen werden. Am freien Ende gebildete Zungen verbessern den Halt im entsprechenden Sackloch 13, während am außen liegenden Ende ausgebogene Zungen den Halt innerhalb der Bohrung 4 verbessern. Statt dessen können auch die Mantelfläche einer Bohrung 4 und die des von ihr aufgenommenen Ankerstiftes 6 mit formschlüssig ineinandergreifenden Elementen wie Ringnuten, Vorsprüngen oder Ringwülsten ausgestattet sein, die ein formschlüssiges Eingreifen und Sichern im voll eingeschobenen Zustande des Ankerstiftes 6 ermöglichen. Fig. 10 zeigt weiterhin, daß bei Anwendung zweier Ankerstifte 6 der Bolzen 1 kurz ausgeführt und von eigentlichen verankernden Kräften freigehalten werden kann: Die Verankerung in der Wandung 10 wird in diesem Falle fast ausschließlich durch die tief in die Wandung eingreifenden Ankerstifte 6 bewirkt. Es besteht auch die Möglichkeit, gemäß Fig. 11 den Ansatz 2 des Bolzens gegenüber dessen eigentlichen Körper geringfügig abzukanten, und die gleiche Maßnahme läßt sich auch bei entsprechend Fig. 8 über ihre ganze Länge gleich stark ausgeführten Bolzen anwenden: Im Ausführungsbeispiel der Fig. 11 wird die Abkantung derart bewirkt, daß die Achsen des Bolzens 1 und des Ankerstiftes 6 etwa gleiche Winkel mit der auf der Oberfläche der Wandung 10 stehenden Normalen aufweisen und die Achse des Ansatzes 2 wandnormal verläuft. Entsprechend den unterschiedlichen Stärken des Bolzens 1 und des Ankerstiftes 6 lassen sich auch gegebenenfalls unterschiedliche mit der Wandungsnormalen gebildete Winkel einhalten, um eine symmetrische Verteilung der Last auch bei unterschiedlichen Durchmessern zu erlangen. Gemäß Fig. 12 kann das Abkanten des hier mit gleicher Stärke wie der des Bolzens ausgeführten Ansatzes 2 so stark vorgenommen sein, daß der Ankerstift 6 und die ihn aufnehmende Bohrung 4 wandungsnormal verlaufen und die Achse des Bolzens 1 und damit des Sackloches 12 um den empfohlenen Winkel von etwa 15° bzw. im Bereich von 2,5° bis 45° gegen die Wandungsnormale geneigt ausgeführt sind. Ein etwas tieferes Einsetzen des Ankerstiftes 6 erlaubt, zusätzlich zum Außengewinde des Ansatzes 2 oder anstelle desselben ein Innengewinde vorzusehen, das in den oberen Bereich der Bohrung 4 oder eine gegebenenfalls deren Mündung bildende Bohrung etwas größeren Durchmessers eingeschnitten sein kann.-

In jedem dieser Fälle wird mit dem Bolzen 1 ein Anker geschaffen, der bei leichter Herstellbarkeit mit einfachen Arbeitsvorgängen in eine Wandung einbringbar ist und sich dort mittels des oder der Ankerstifte verläßlich und hochbelastbar hält.

Bei der Auslegung der Schrägstellung von Ankerstiften bzw. der gegenseitigen Neigung der Achsen des Bolzens und des bzw. der Ankerstifte haben sich relativ spitze Winkel bewährt: Zwar verläuft ein längeres Teilstück des Ankerstiftes innerhalb des Bolzens, dafür jedoch wirken sich übertragene Zugkräfte in größerer Tiefe von Betonwandungen aus, so daß sie dort zum Teil mit Druckkräften übernehmbar sind und damit sich die größere Tiefe als belastbarer erweist als oberflächliche Schichten, da der Beton nur mit relativ geringen Zugkräften belastbar ist. So können relativ hohe Belastungen bei Neigungswinkeln von 15° erzielt werden, so daß sich ein Bereich der Neigungswinkel zwischen 2,5° und 45° als vorteilhaft erweist.

## Patentansprüche

1. In in eine Wandung eingearbeitete Bohrung einbringbarer Bolzen (1) zum Verbinden von Bauteilen mit Wandflächen insbesondere von Ziegel- oder Betonbauten, wobei der Bolzen einen gewindelosen, zylindrischen Verankerungsabschnitt und einen Befestigungsabschnitt zur Aufnahme des Bauteils aufweist, mit einer Vorrichtung zur Stabilisierung seines Sitzes und zur Verankerung gegen Ausziehen durch ihn beanspruchende Zugkräfte, mit einer den Bolzen schräg durchdringenden, um einen Winkel zwischen 2,5 und 45° gegen seine Achse geneigten, aus seiner Mantel- und/oder Rückfläche (5, 14) austretenden Bohrung, in die ein entsprechend schräg verlaufender und in seiner Länge die der Bohrung des Bolzens überschreitender zylindrischer Ankerstift (6) eingeführt ist, der zur Verankerung des Bolzens gegen Zugkräfte in ein zusätzliches Sackloch (13) der Wandung (10) eingreift.

2. Bolzen nach Anspruch 1,
**dadurch gekennzeichnet,**
daß seine (1) Achse und die des Ankerstiftes bzw. der Ankerstifte (6) um 12° bis 20° gegeneinander geneigt sind.

3. Bolzen nach Anspruch 1 oder 2,
**dadurch gekennzeichnet,**
daß er (1) zwei oder mehr zur Aufnahme von Ankerstiften (6) vorgesehene Bohrungen (4) aufweist.

4. Bolzen nach einem der Ansprüche 1 bis 3,
**dadurch gekennzeichnet,**
daß Bohrungen (4) gegeneinander mindestens um den Durchmesser der Ankerstifte (6) versetzt angeordnet sind.

5. Bolzen nach einem der Ansprüche 1 bis 4,
**dadurch gekennzeichnet,**
daß er (1) auf einen mit einem Gewinde versehenen Ansatz (2) abgesetzt ist und die Bohrung im wesentlichen in den den Absatz umschließenden Bund (3) eingebracht ist.

6. Bolzen nach Anspruch 5,
**dadurch gekennzeichnet,**
daß der Ansatz (2) exzentrisch zur Achse des Bolzens (1) vorgesehen ist.

7. Bolzen nach einem der Ansprüche 1 bis 6,
**dadurch gekennzeichnet,**
daß seine (1) Mantelfläche (5) und/oder die des Ankerstiftes (6) eine Textur aufweisende, bspw. gerändelte, Oberflächenbereiche (16) aufweisen.

8. Bolzen nach einem der Ansprüche 1 bis 7,
**dadurch gekennzeichnet,**
daß seine (1) hinteren Enden und/oder die des Ankerstiftes (6) Schlitze (11, 6) aufweisen.

9. Bolzen nach einem der Ansprüche 1 bis 8,
**dadurch gekennzeichnet,**
daß er (1) und der oder die Ankerstifte (6) beim vollendeten Einbringen derselben in Bohrungen (4) formschlüssig ineinandergreifende Elemente aufweisen.

10. Bolzen nach einem der Ansprüche 1 bis 8,
**dadurch gekennzeichnet**,
daß sein (1) Ansatz (2) bzw. sein freistehender Vorderteil gegen den eigentlichen Schaft des Bolzens abgekantet ist.

11. Bolzen nach Anspruch 10,
**dadurch gekennzeichnet**,
daß die Bohrung (4) seinen Ansatz (2) oder sein freistehendes Vorderteil zentrisch durchsetzt.

12. Bolzen nach einem der Ansprüche 1 bis 11,
**dadurch gekennzeichnet**,
daß er (1) eine in seine Stirnfläche (8) eingebrachte, mit einem Motorgewinde ausgestattete achsparallele Bohrung (9) aufweist.

13. Bolzen nach Anspruch 12,
**dadurch gekennzeichnet**,
daß die achsparallele Bohrung (9) als Sackbohrung ausgebildet ist.

14. Bolzen nach Ansoruch 12 oder 13,
**dadurch gekennzeichnet**,
daß die achsparallele Bohrung (9) mit der Achse des Bolzens (1) gleichachsig ist.

15. Bolzen nach einem der Ansprüche 1 bis 14,
**dadurch gekennzeichnet**,
daß sein (1) freies vorderes, gegebenenfalls abgesetztes Ende (Ansatz 2) mit einem Außengewinde ausgestattet ist.

## Claims

1. A bolt (1) to be inserted into a bore made in a wall for connecting components with wall surfaces, especially brick or concrete structures, with the bolt having a threadless, cylindrical anchoring portion and an attachment portion to receive the component, having a device for stabilising its seat and for anchoring to prevent its withdrawal by tensile forces acting thereon, having a bore which passes diagonally through the bolt, is inclined in relation to its axis by an angle of between 2.5 and 45° and leaves its shell and/or rear face (5, 14), into which bore a cylindrical anchor pin (6) is introduced, which correspondingly extends diagonally and is longer than the bore of the bolt, and which engages in an additional blind hole (13) in the wall (10) to anchor the bolt against tensile forces.

2. A bolt according to Claim 1,
**characterised in that** its (1) axis and the axis of the anchor pin or pins (6) respectively are inclined in relation to one another by 12° to 20°.

3. A bolt according to Claim 1 or 2,
**characterised in that** it (1) comprises two or more bores (4) provided to house anchor pins (6).

4. A bolt according to one of Claims 1 to 3,
**characterised in that** bores (4) are disposed offset in relation to one another at least by the diameter of the anchor pins (6).

5. A bolt according to one of Claims 1 to 4,
**characterised in that** it (1) is stepped on a projection (2) provided with a thread and the bore is inserted substantially into the collar (3) surrounding the projection.

6. A bolt according to Claim 5,
**characterised in that** the projection (2) is provided eccentrically to the axis of the bolt (1).

7. A bolt according to one of Claims 1 to 6,
**characterised in that** its (1) shell surface (5) and/or that of the anchor pin (6) have textured, e.g. knurled, surface regions (16).

8. A bolt according to one of claims 1 to 7,
**characterised in that** its (1) rear ends and/or those of the anchor pin (6) have slits (11, 6).

9. A bolt according to one of Claims 1 to 8,
**characterised in that** it (1) and the anchor pin or pins (6) have members interlocking with form-fit when said pins have been completely inserted into bores (4).

10. A bolt according to one of Claims 1 to 8,
**characterised in that** its (1) projection (2) or its free-standing front part respectively is bent in relation to the actual shaft of the bolt.

11. A bolt according to Claim 10,
**characterised in that** the bore (4) centrally passes through its projection (2) or its free-standing front part.

12. A bolt according to one of Claims 1 to 11,
**characterised in that** it (1) comprises an axially parallel bore (9) provided in its front face (8) and equipped with a motor thread.

13. A bolt according to Claim 12,
**characterised in that** the axially parallel bore (9) is designed as a blind bore.

14. A bolt according to Claim 12 or 13,
**characterised in that** the axially parallel bore (9) is coaxial with the axis of the bolt (1).

15. A bolt according to one of claims 1 to 14,
**characterised in that** its (1) free front end (projection 2), which if appropriate is stepped, is equipped with an external thread.

## Revendications

1. Boulon (1) qui peut être introduit dans un perçage ménagé dans un mur, pour relier des pièces de constructions à des surfaces murales, en particulier d'édifices en brique ou en béton, le boulon présentant un tronçon d'ancrage cylindrique dépourvu de filetage et un tronçon de fixation destiné à recevoir la pièce de construction, comportant un dispositif de stabilisation de son assise et d'ancrage contre l'arrachement causé par les forces de traction qui le sollicitent, comportant un perçage traversant le boulon en oblique, présentant une inclinaison d'un angle entre 2,5 et 45° par rapport à son axe, le perçage sortant de sa surface enveloppe et/ou arrière (5, 14), dans lequel est introduit un goujon d'ancrage (6) cylindrique, oblique de manière correspondante et dont la longueur dépasse celle du perçage du boulon, ledit goujon d'ancrage s'engageant dans un trou borgne (13) supplémentaire du mur (10), pour ancrer le bouton contre les forces de traction.

2. Boulon (1) selon la revendication 1, caractérisé en ce que son axe et celui du ou des goujons d'ancrage (6) sont inclinés l'un par rapport à l'autre de 12° à 20°.

3. Bouton (1) selon l'une des revendications 1 ou 2, caractérisé en ce qu'il présente deux perçages (4) ou plus prévus pour recevoir des goujons d'ancrage (6).

4. Bouton (1) selon l'une quelconque des revendications 1 à 3, caractérisé en ce que des perçages (4) sont agencés en décalage les uns par rapport aux autres au moins de la valeur du diamètre des goujons d'ancrage (6).

5. Bouton (1) selon l'une quelconque des revendications 1 à 4, caractérisé en ce qu'il est prévu en décalage sur un prolongement (2) pourvu d'un filetage et en ce que le perçage est essentiellement ménagé dans l'épaulement (3) entourant le prolongement.

6. Boulon (1) selon la revendication 5, caractérisé en ce que le prolongement (2) est prévu excentrique par rapport à l'axe du bouton (1).

7. Bouton (1) selon l'une quelconque des revendications 1 à 6, caractérisé en ce que sa surface enveloppe (5) et/ou celle du goujon d'ancrage (6) présentent des régions de surface (16) présentant une texture, par exemple moletées.

8. Boulon (1) selon l'une quelconque des revendications 1 à 7, caractérisé en ce que son extrémité postérieure et/ou celle du goujon d'ancrage (6) présentent des fentes (11).

9. Boulon (1) selon l'une quelconque des revendications 1 à 8, caractérisé en ce que celui-ci et le ou les goujons d'ancrage (6) présentent des éléments s'engageant les uns dans les autres en coopération de forme lors de leur mise en place complète dans des perçages (4).

10. Boulon (1) selon l'une quelconque des revendications 1 à 8, caractérisé en ce que son prolongement (2) ou sa partie antérieure libre est coudé par rapport au fût proprement dit du boulon.

11. Bouton (1) selon la revendication 10, caractérisé en ce que le perçage (4) traverse au centre son prolongement (2) ou sa partie antérieure libre.

12. Boulon (1) selon l'une quelconque des revendications 1 à 11, caractérisé en ce qu'il présente un perçage (9) parallèle à l'axe, pourvu d'un taraudage, ledit perçage étant ménagé dans sa face frontale (8).

13. Boulon (1) selon la revendication 12, caractérisé en ce que le perçage (9) parallèle à l'axe a la forme d'un trou borgne.

14. Bouton (1) selon l'une ou l'autre des revendications 12 ou 13, caractérisé en ce que le perçage (9) parallèle à l'axe est coaxial à l'axe du bouton (1).

15. Bouton (1) selon l'une quelconque des revendications 1 à 14, caractérisé en ce que son extrémité libre antérieure, le cas échéant étagée (prolongement 2), est pourvue d'un filetage.
